# EUROPEAN PATENT APPLICATION

(11) **EP 4 425 764 A1**
(43) Date of publication of application: **04.09.2024**
(21) Application number: 23159543.0
(22) Date of filing: 02.03.2023
(51) Int. Cl.: H02K 7/102, H02K 9/19, H02K 7/02

(54) **HYDRAULICALLY BRAKEABLE ELECTRICAL MACHINE**

(71) Applicant: VOLVO TRUCK CORPORATION, 405 08 Göteborg (SE)
(72) Inventor: ALM, Ivar, 475 31 Öckerö (SE); LORD, John, 424 72 Olofstorp (SE); ANDERSSON, Rasmus, 422 49 Hisings Backa (SE); SUSIC, Ronald, 417 61 Göteborg (SE); HUANG, Zhe, 413 11 Göteborg (SE)
(74) Representative: Ström & Gulliksson AB

(57) **Abstract**

An electrical machine (**100**) is presented. The electrical machine (**100**) comprises a rotor (**120**), a stator (**110**), a housing (**140**) and a fluid circuit (**130**) provided between an interior of the housing (**140**) and the rotor (**120**) axially along a longitudinal axis (A) of the rotor (**120**). The fluid circuit (**130**) is adapted to, by means of a fluid (**102**) in the fluid circuit (**130**), exert a braking torque on the rotor (**120**).

## Description

### TECHNICAL FIELD

The disclosure relates generally to electrical machines. In particular aspects, the disclosure relates to hydraulically breakable electrical machines. The disclosure can be applied to general electrical machines and in particular to electrical propulsion machines for heavy-duty vehicles, such as trucks, buses, and construction equipment, among other vehicle types. Although the disclosure may be described with respect to a particular vehicle, the disclosure is not restricted to any particular vehicle.

### BACKGROUND

Modem vehicles may be provided with electrical machines. One particular use of electric machines in vehicles is for traction purpose, i.e. the electrical machines are arranged as part of the drive train to perform the desired propulsion of the vehicle. These electrical machines are connected to one or more battery arrangements which provide the electrical machines with the required electrical power.

Electrical machines can also be used to provide retardation of the vehicle, changing the operational mode of the electrical machine from propulsion mode to regeneration mode. In such case the regeneration of electrical power will cause a retarding effect on the vehicle.

Other electrical machines may be used as alternators being operatively connected to a propulsion source of the vehicle and configured to generate electrical power therefrom.

However, braking of the electric vehicle using the electrical machine or storing electrical power from the alternator can only be performed as long as an associated battery arrangement is capable of receiving the (re)generated electrical power. If the battery arrangement is fully (or close to fully) charged, braking can no longer be achieved by means of the electrical machine.

Based on this, there is a need for improved solutions enabling the electrical machine of a vehicle to brake the vehicle even if the associated battery arrangement is not capable of receiving the generated electrical power.

### SUMMARY

In a first aspect, an electrical machine is presented. The electrical machine comprises a rotor, a stator, a housing and a fluid circuit provided between an interior of the housing and the rotor axially along a longitudinal axis of the rotor. The fluid circuit is adapted to, by means of a fluid in the fluid circuit, exert a braking torque on the rotor. A technical benefit may comprise providing a braking effect internal to the electrical machine with very few design modifications to the electrical machine.

In some examples, including in at least one preferred example, optionally, a width extension of the fluid circuit axially along the longitudinal axis of the rotor is defined by a first surface and a second surface facing each other, the first surface is provided by a surface of the rotor. Using a surface of the rotor as part of the fluid circuit is advantageous as a hydraulic brake may be provided with very few design modifications on the electrical machine.

In some examples, including in at least one preferred example, optionally, the first surface and the second surface are respectively provided with one or more vanes adapted to fluidly engage vanes of the other surface to provide a viscous drag between the surfaces. This is advantageous as the vanes will increase a flow of the fluid and thereby increase the viscous drag and the braking of the rotor.

In some examples, including in at least one preferred example, optionally, the second surface is provided by a surface of the housing. This is advantageous as a hydraulic brake internal to the electrical machine may be provided with very few design modifications to the electrical machine.

In some examples, including in at least one preferred example, optionally, the fluid circuit further comprises an intermediate part rotatably arranged on the longitudinal axis of the rotor axially between the rotor and the housing, the second surface is provided by a surface of the intermediate part. This is advantageous as it increases the controllability of the viscous drag and the braking effect of the fluid circuit.

In some examples, including in at least one preferred example, optionally, the first surface and/or the second surface is movable along the rotational axis to control the width extension of the fluid circuit. This is advantageous as it increases the controllability of the viscous drag and the braking effect of the fluid circuit.

In some examples, including in at least one preferred example, optionally, the fluid circuit further comprises a substantially constant amount of fluid. This is advantageous as fewer parts are required, decreasing a cost of the electrical machine and increasing the uptime of the electrical machine as fewer parts decrease a risk of component facility statistically increasing a mean time between failures.

In some examples, including in at least one preferred example, optionally, the fluid circuit further comprises at least one fluid inlet for receiving the fluid into the fluid circuit and at least one fluid outlet for draining the fluid from the fluid circuit. This is advantageous as it increases the controllability of the viscous drag and the braking effect of the fluid circuit.

In some examples, including in at least one preferred example, optionally, the fluid circuit is arranged at a side of the stator proximal to a drive shaft of the electrical machine. This is advantageous as a hydraulic brake internal to the electrical machine may be provided with very few design modifications to the electrical machine.

In some examples, including in at least one preferred example, optionally, wherein the fluid circuit is arranged at a side of the stator distal to a drive shaft of the electrical machine. This is advantageous as a hydraulic brake internal to the electrical machine may be provided with very few design modifications to the electrical machine.

In some examples, including in at least one preferred example, optionally, the electrical machine is a propulsion motor for a vehicle or an alternator. This is beneficial as a hydraulic retarder may be provided without substantially changing a cost of the vehicle, a weight of the vehicle or a number of components of the vehicle.

In some examples, including in at least one preferred example, optionally, a width extension of the fluid circuit axially along the longitudinal axis of the rotor is defined by a first surface and a second surface facing each other. The first surface is provided by a surface of the rotor. The first surface and the second surface are respectively provided with one or more vanes adapted to fluidly engage vanes of the other surface to provide a viscous drag between the surfaces. The second surface is provided by a surface of the housing or the fluid circuit further comprises an intermediate part rotatably arranged on the longitudinal axis of the rotor axially between the rotor and the housing, the second surface is provided by a surface of the intermediate part. The first surface and/or the second surface is movable along the rotational axis to control the width extension of the fluid circuit, preferably. The fluid circuit further comprises a substantially constant amount of fluid or the fluid circuit further comprises at least one fluid inlet for receiving the fluid into the fluid circuit and at least one fluid outlet for draining the fluid from the fluid circuit. The fluid circuit is arranged at a side of the stator proximal to a drive shaft of the electrical machine or wherein the fluid circuit is arranged at a side of the stator distal to a drive shaft of the electrical machine. The electrical machine is a propulsion motor for a vehicle or an alternator for the vehicle.

In a second aspect, a vehicle comprising the electrical machine according to the first aspect is presented.

In some examples, including in at least one preferred example, optionally, the electrical machine comprises at least one fluid inlet for receiving the fluid into the fluid circuit and at least one fluid outlet for draining the fluid from the fluid circuit. The fluid inlet and fluid outlet are operatively connected to a temperature system of the vehicle. This is advantageous as heat generated by the fluid circuit may be utilized to heat the vehicle and the vehicle may in turn cool the fluid to reduce a risk of the fluid over heating during braking.

In a third aspect, a method of exerting a braking torque on the rotor of an electrical machine is presented. The electrical machine is the electrical machine of the first aspect and the method comprises controlling a viscous drag of the fluid circuit.

In some examples, including in at least one preferred example, optionally, controlling a viscous drag of the fluid circuit comprises providing fluid at an inlet of the fluid circuit and/or draining fluid at an outlet of the fluid circuit. This is advantageous as it increases the controllability of the viscous drag and the braking effect of the fluid circuit.

In some examples, including in at least one preferred example, optionally, controlling a viscous drag of the fluid circuit comprises a controlling a width extension of the fluid circuit, the width extension is defined along the longitudinal axis by a distance between a first surface and an opposing second surface of the fluid circuit. This is advantageous as it increases the controllability of the viscous drag and the braking effect of the fluid circuit.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary side view of a vehicle according to some examples.
**FIG. 2** is an exemplary cross-sectional view of an electrical machine according to some examples.
**FIG. 3** is an exemplary cross-sectional view of a fluid circuit according to some examples.
**FIG. 4** is an exemplary cross-sectional view of a fluid circuit according to some examples.
**FIGS. 5A-B** are exemplary cross-sectional views of fluid circuits according to some examples.
**FIG. 6** is an exemplary cross-sectional view of a fluid circuit according to some examples.
**FIG. 7** is an exemplary cross-sectional view of an electrical machine according to some examples.
**FIG. 8** is an exemplary cross-sectional view of an electrical machine according to some examples.
**FIG. 9** is an exemplary block diagram of an electrical machine forming part of a fluid circuit of a vehicle according to some examples.
**FIGS. 10-11** are exemplary schematic views of methods according to some examples.

### DETAILED DESCRIPTION

The detailed description set forth below provides information and examples of the disclosed technology with sufficient detail to enable those skilled in the art to practice the disclosure.

Details of an electrical machine will be described in the following. The electrical machine according to the present disclosure aims to add a braking functionality to the electrical machine by utilizing oil or any other suitable fluid. Such oil may be oil already provided to e.g., cool down the electrical machine during operation. By implementing the electrical machine in a vehicle, a braking force may be applied to the vehicle by means of the electrical machine even if regeneration of electrical power is not available due to e.g. the associated battery arrangement being fully, or almost fully, charged.

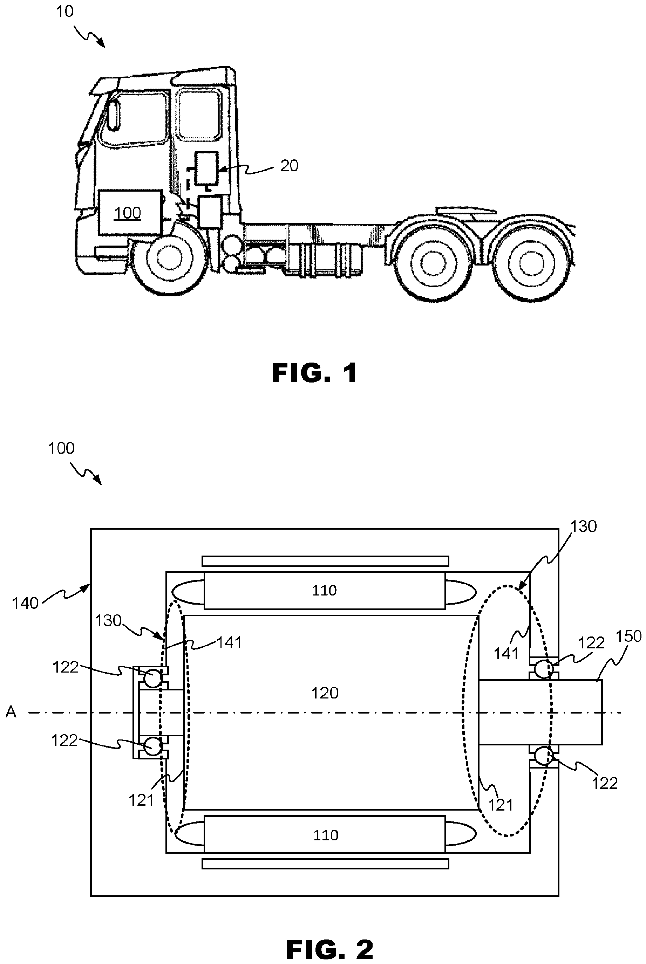

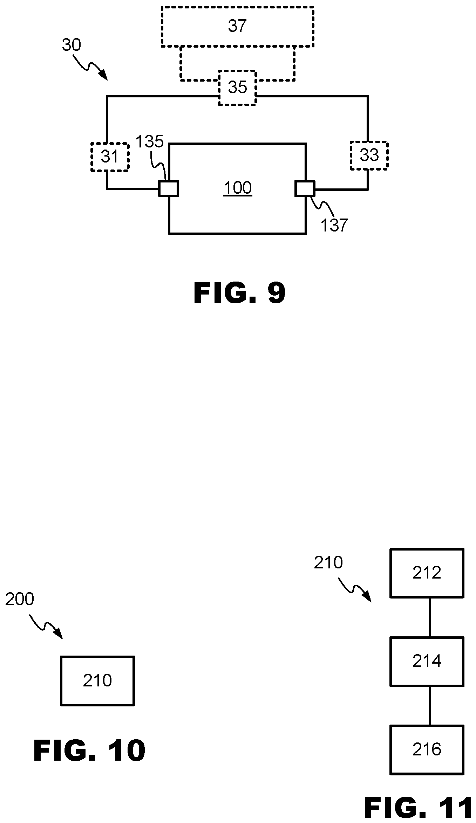

With reference to **FIG. 1****,** a vehicle **10,** here embodied as a heavy duty truck **10,** is disclosed for which an electrical machine **100** and a method **200** (see **FIG. 10**) for braking an electrical machine **100** are advantageous. However, the electrical machine **100** and/or the method **200** may as well be implemented in other types of applications, in particular in other types of vehicles such as busses, light-weight trucks, passenger cars, marine applications, etc.

The vehicle **10** is preferably an electric vehicle, such as a full electric vehicle or a hybrid vehicle, comprising at least one electrical machine **100** for propulsion. Typically the vehicle **10** also comprises an energy storage system **20** comprising energy storage or energy transformation devices, typically batteries or fuel cells. The energy storage system **20** is arranged and configured to power the electrical machine **100.**

The vehicle **10** typically further comprises other parts of a powertrain such as a transmission, drive shafts, and wheels (not shown in details in **FIG. 1**).

An example of an electrical machine **100** is shown in **FIG. 2****.** The electrical machine **100** has a rotor **120,** a stator **110,** and a housing **140.** The rotor **120** is rotatably supported by the housing **140** e.g. by means of one or more bearings **122,** allowing the rotor **120** to rotate around a rotational axis **A** which advantageously is aligned with a longitudinal axis **A** of the rotor **120.** The stator **110** is also enclosed by the housing **130** and arranged radially to the rotational axis **A** outside of the rotor **110.**

The electrical machine **100** is further provided with at least one and fluid circuit **130.** The fluid circuit **130** is provided between an interior of the housing **140** and the rotor **120** axially along the longitudinal axis **A** of the rotor **120.** In **FIG. 2****,** the electrical machine **100** comprises two fluid circuits **130,** one at each axial end of the rotor **120.** However, as will be apparent from the present disclosure, examples with only one fluid circuits **130** or more than two fluid circuits **130** are well within the scope of the present disclosure.

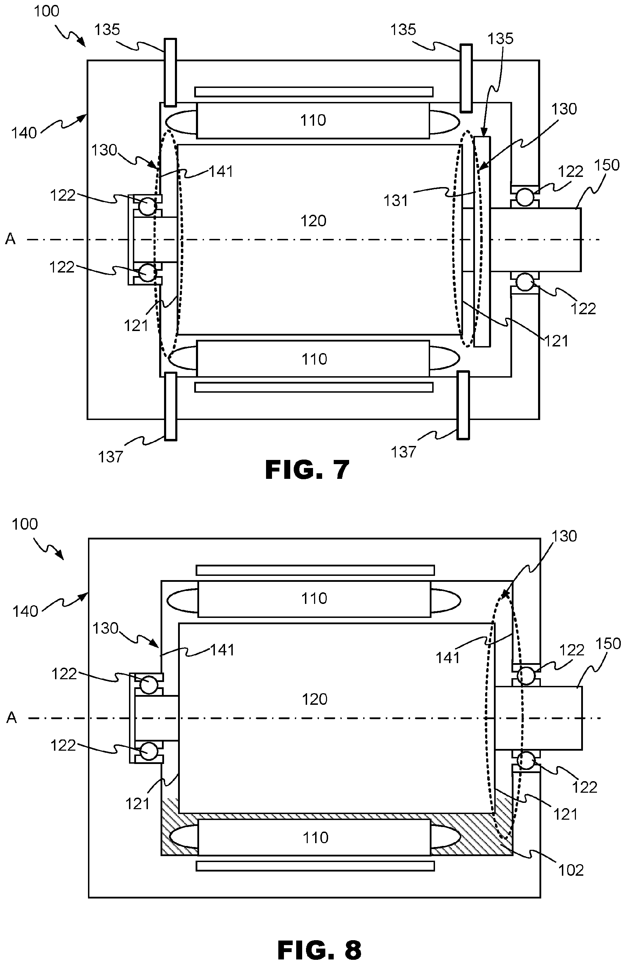

The fluid circuit **130** is adapted to, by means of a fluid **102** (see **FIG. 8**) in the fluid circuit **130,** exert a braking torque on the rotor **120.** In other words, the fluid circuit **130** may function as a hydraulic retarder, providing a braking effect on the rotor **120** by viscous drag from the fluid **102** and inertia effects of the fluid **102** being thrown between moving and stationary surfaces.

Hydraulic retarders are well known in the art and use viscous drag forces between dynamic and static members in a fluid-filled chamber to achieve retardation. Hydraulic retarders are extremely quiet and when used in combustion vehicles, substantially inaudible over the sound of a running engine. For electric or hybrid vehicles **10,** reducing noise is an important factor as the comfort, silence and working environment of electric and hybrid vehicles **10** are some key features in selecting an electric or hybrid vehicle **10.**

Having such a fluid circuit internal to the electrical machine **100** will reduce a number of components of a vehicle **10** using the electrical machine **100** as no external hydraulic retarder is required. It should be mentioned that the electrical machine **100** of the present disclosure may very well be combined with an external retarder of any suitable size, shape or form (e.g. hydraulic, exhaust etc.). As will be apparent form the present disclosure, the fluid circuit **130** is a comparably minor modification to a general electrical machine which means that only minor changes are required in a production process in order to transform a general electrical machine into an electrical machine **100** comprising the fluid circuit **130** of the present disclosure. Further, having external hydraulic retarders will not only increase cost of a vehicle, weight will increase and mean time between failures will decrease as more components are available that may potentially break or require service.

In **FIG. 2****,** the fluid circuits **130** are defined at a first end along the rotational axis A by a first surface **121** that is an axial surface of the rotor **120.** The fluid circuits **130** are defined at a second, opposite, end along the rotational axis A by a second surface **141** that is a radial surface of the housing **140.** The first and second surfaces **121, 141** of each fluid circuit **130** face each other. As the rotor **120** rotates, the first surface **121** will rotate with it and stir, splash or otherwise excite fluid **102** in the fluid circuit **130.** The opposite second surface **141** (in **FIG. 2** on the housing **140**) is stationary and will prevent or reduce the movement of the fluid **102** causing the viscous drag.

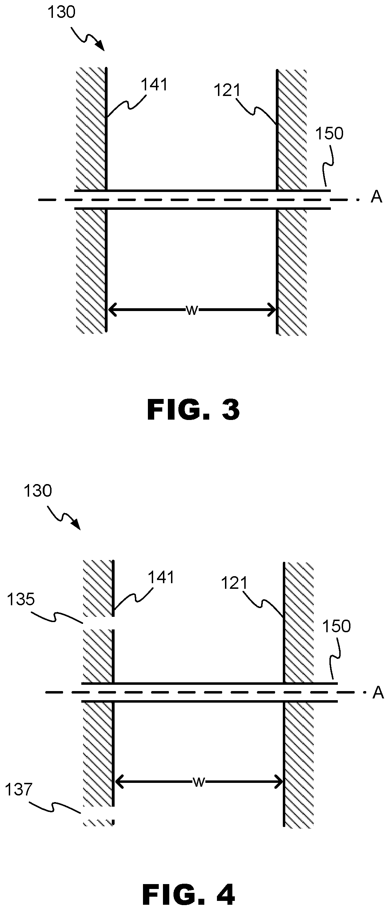

The amount of viscous drag may be controlled by one or more parameters of the fluid circuits **130.** One such parameter is a width extension **w** of the fluid circuit **130,** see **FIG. 3****,** i.e. an axial distance between the rotating surface, the first surface **121** of the rotor **120,** and a stationary surface, the second surface **141** of the housing **140.** The shorter the width extension **w,** the higher the viscous drag, i.e. braking torque, assuming a constant amount of fluid **102** in the fluid circuit **130.** In order to control the width extension **w,** the rotor **120** may axially movable to alter the width extension **w.** Advantageously, the axial positon of the second surface **141** of the housing **140** may be controlled by suitable arrangements external to electrical machine **100** and/or by arrangements internal to the electrical machine **100.** To exemplify, the second surface **141** of the housing **140** may be pneumatically and/or electronically controlled (e.g. by means of suitable actuators) between two discrete axial positions (or stepwise or continuously between two extreme axial positons), wherein a first position exhibits a reduced width extension **w** compared to a second position. At the first position, the width extension **w** is sufficiently short such that a viscous drag is provided between the first surface **121** and the second surface **141** due to rotation of the first surface **121.** At the second position, the width extension **w** is sufficiently long such that substantially no viscous drag is provided between the first surface **121** and the second surface **141** due to rotation of the first surface **121.** The dimensioning of the width extension **w** in relation to a viscous drag will depend on e.g. a rotational speed of the rotor **120,** however, the particulars of designing a hydraulic retarder are well known in the art and will not be further detailed herein. It should be mentioned that, although it may result in a more complex design, axial movement of the rotor **120** similar to the axial movement of the second surface **141** of the housing **140** is well within the scope of the present disclosure.

As indicated above, the braking effect exerted by the fluid circuit **130** may depend on an amount of fluid **102** in the fluid circuit **130.** In **FIG. 4****,** an exemplary fluid circuit **130** with a controllable amount of fluid is schematically shown. In this example, the fluid circuit **130** comprises at least one fluid inlet **135** for receiving the fluid **102** into the fluid circuit **130.** The fluid inlet **135** allows for increase of an amount of fluid **102** in the fluid circuit **130.** Advantageously, the fluid circuit **130** further comprises at least one fluid outlet **137** for draining the fluid **102** from the fluid circuit **130.** By increasing an amount of fluid **102** in the fluid circuit **130,** the viscous drag is increased. By decreasing an amount of fluid **102** in the fluid circuit **130,** the viscous drag is decreased.

Depending on how the fluid inlet **135** and/or fluid outlet **137** are connected externally to the electrical machine **100,** only one of the fluid inlet **135** or the fluid outlet **137** is required to fully control an amount of fluid **102** in the fluid circuit **130.** By having a fluid pump connected to a fluid port **135, 137** (may be either the fluid inlet **135** or the fluid outlet **137**) and configured to pump fluid into the fluid circuit **130** via the fluid port **135, 137** when a braking effect is desired. When the braking effect is not desired, the fluid pump may be configured to seize pumping and revert to sucking the fluid **102** from the fluid chamber and/or fluid **102** may be drained from the fluid circuit **130** by e.g. gravity and residual rotation of the rotor **120.** One or more valves may be connected the fluid inlet **135** and/or the fluid outlet **137** to control the flow of fluid **102** in and/or out from the fluid circuit **130.**

It should be mentioned that the width controlled introduced with reference to **FIG. 3** and the fluid control introduced with reference to **FIG. 4** may very well be combined in order to further increase a controllability of the braking torque on the rotor **120.**

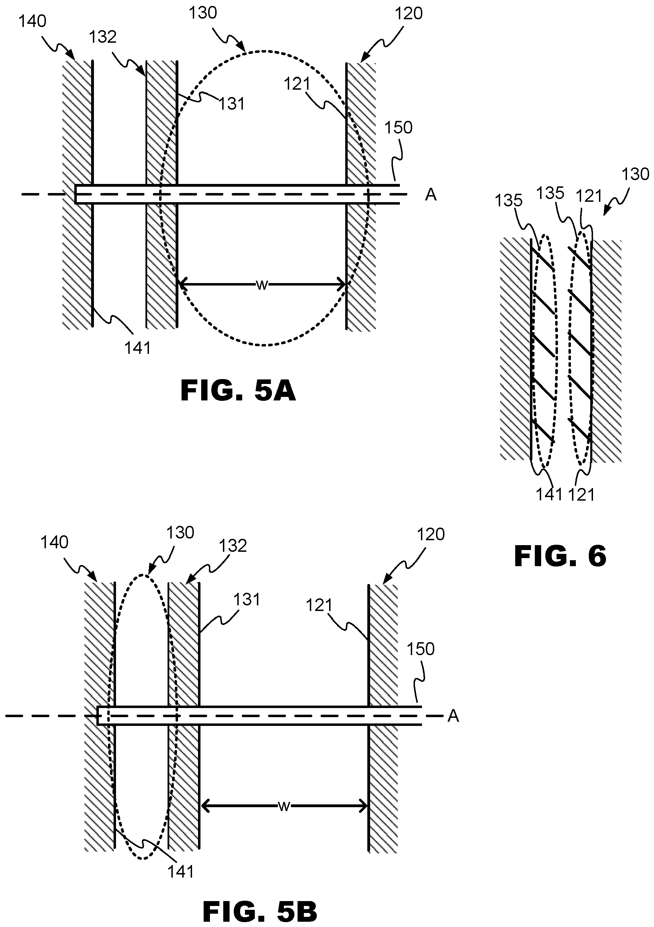

In **FIGS. 5**A-B, a further exemplary fluid circuit **130** of an electrical machine **100** is shown. In this example, the fluid circuit **130** comprises an intermediate part **132** arranged axially between the rotor **120** and the housing **140.** The intermediate part **132** is arranged around the rotational axis A of the electrical machine **100** and advantageously extends radially around the rotational axis A. The intermediate part **135** is advantageously discshaped. The intermediate part **132** is provided with a first surface **131** facing the first surface **121** of the rotor **120.** The intermediate part **132** is provided with a second surface **132** facing the radial surface **141** of the housing **140.**

In **FIG. 5A****,** the first surface **121** of the fluid circuit **130** is provided by the radial surface **121** of the rotor **120.** The second surface **131** of the fluid circuit **130** is provided by the first surface **131** of the intermediate part **132.** In this example, the viscous drag of the fluid circuit **130** may be controlled by controlling the amount of fluid **102** in the fluid circuit **130** and/or axially moving the rotor **120** as mentioned above. Additionally, or alternatively, the viscous drag may be controlled by axially moving the intermediate part **132** to change the width extension **w** of the fluid circuit.

In an advantageous example, the intermediate part **132** is rotatably arranged on the longitudinal axis A of the rotor **120.** This is to mean that the intermediate portion **132** may rotate around the longitudinal axis **A** independently of the rotation of the rotor **120.** Advantageously, the rotation of the intermediate part **132** around the rotational axis **A** may be controlled. Specifically, the rotation of the intermediate part **132** around the rotational axis **A** may be prevented. In a first mode of operation, the intermediate part **132** is permitted to rotate freely which means that any viscous drag produced by the rotation of the rotor **120** will cause the intermediate part **132** to rotate. At a second mode of operation, the intermediate part **132** is prevented from rotating which means that any viscous drag produced by the rotation of the rotor **120** will cause a braking torque on the rotor **120.** The intermediate part **132** may be prevented from rotating by e.g. a suitable locking mechanism engaging the intermediate part **132** form the housing **140.**

It should be mentioned that that, if the intermediate part **132** is permitted to around the longitudinal axis **A** independently of the rotation of the rotor **120,** the intermediate part may be configured to function as a fly-wheel of the electrical machine **100.** If the intermediate part **132** is not prevented from rotating, a decrease in rotational speed of the rotor **120** will be counteracted by the intermediate part **132.** The intermediate part **132** may be compared to having a kinetic energy recovery system (KERS) integrated in the electrical machine **100.**

In **FIG. 5A****,** the fluid circuit **130** is provided between the intermediate part **135** and the rotor **120.** In **FIG. 5B****,** the fluid circuit **130** is provided between the intermediate part **132** and the housing **140.** To this end, the first surface **132** of the fluid circuit **130** is provided by the second surface **132** of the intermediate part **132.** The second surface **141** of the fluid circuit **130** is provided by the radial surface **141** of the housing **140.** In this example, the viscous drag of the fluid circuit **130** may be controlled by controlling the amount of fluid **102** in the fluid circuit **130,** axially moving the rotor **120** and/or the intermediate part **132** as mentioned above.

It should be mentioned that the electrical machine **100** may very well be provided with a fluid circuit **130** at either axial side of the intermediate part **132.**

In **FIG. 6** a cross-sectional view of a partial fluid circuit **130** is shown. The fluid circuit **130** is formed by the stator **120** and the housing, but the particulars of **FIG. 6** are usable with any fluid circuit **130** presented herein. In **FIG. 6****,** the first surface **141** and the second surface **141** of the fluid circuit **130** are respectively provided with a plurality of vanes **135.** The vanes **135** are adapted to fluidly engage vanes **135** of the other surface opposite surface **121, 141** to provide an increased viscous drag between the surfaces **121, 141.** The vanes **135** in **FIG. 6** extend at an angle from their respective surface **121, 141.** The angle of the vanes will depend on requirements on the hydraulic retardation and dimensioning of these is known to the skilled person. Further, the vanes may extend radially along their respective surfaces **121, 141.** The radial extension may be straight or curved depend on requirements on the hydraulic retardation. Advantageously, the vanes **135** are configured to cause the fluid **102** to have a spiraling flow which increases the viscous drag and inertia effects.

Although **FIG. 6** shows both radial surfaces of the fluid circuit **130** provided with vanes **135,** the skilled person appreciates that examples with only one surface provided with vanes is also within the scope of the present disclosure.

In **FIG. 7****,** a further exemplary electrical machine **100** is shown. The electrical machine comprises two fluid circuits **130.** A first fluid circuit **130** is provided at an axial side of the rotor **120** being proximate to a drive shaft **150** of the electrical motor **100.** A second fluid circuit **130** is provided at an axial side of the rotor **120** being distal to a drive shaft **150** of the electrical motor **100.** The first fluid circuit **130** is formed axially between the stator **102** and an intermediate portion **135** as previously presented. The second fluid circuit **130** is formed between the stator **120** and the radial surface **141** of the housing **140.** Each of the fluid circuits **130** is provided with an inlet **135** and an outlet **137.**

**FIG. 8** shows an electrical machine **100** according the present disclosure. The electrical machine **100** comprises a rotor **120,** a stator **110,** a housing **140** and a fluid circuit **130** provided between an interior of the housing **140** and the rotor **120** axially along a longitudinal axis A of the rotor **120.** The fluid circuit **130** is adapted to, by means of a fluid **102** in the fluid circuit **130,** exert a braking torque on the rotor **120.**

Many electrical machines known in the art comprise cooling systems adapted to e.g. cool windings of the electrical machine. In some examples, the electrical machine may comprising such a cooling system (not shown) and the fluid circuit **130** is advantageously configured to form part of the cooling system. In some examples, the cooling system is a Water Ethanol Glycol (WEG) cooling system (not shown).

Returning to **FIG. 1****,** wherein a vehicle **10** comprising the electrical machine **100** was shown. The electrical machine **100** is advantageously a propulsion motor **100** of the vehicle **10,** but may, in some examples, be an alternator of the vehicle **10.** Regardless, the electrical machine **100** may be the electrical machine **100** according to any suitable example presented herein.

In **FIG. 9****,** the electrical machine **100** is shown when forming part of the vehicle **10.** In this example, the electrical machine **100** comprises the fluid ports **135, 137.** The fluid ports **135, 137** may be bidirectional or a fluid inlet **135** and a fluid outlet **137** as previously presented. The fluid ports **135, 137** are connected by an external fluid circuit **30.**

The external fluid circuit **30** may comprise one or more pump devices **35.** The pump device **35** may be configurable to pump fluid into/out from the fluid ports **135, 137** of the fluid circuit **130** of the electrical machine **100.** The pump device **35** may control a pumping and/or draining effect of the fluid circuit **130.** If the pump device **35** is configured to pump fluid **102** into the fluid inlet **135,** this will increase an amount of fluid **102** in the fluid circuit **130** and exert a braking torque on the rotor **120.** If the pump device **35,** e.g. at a later stage of operation, is configured to drain fluid **102** from the outlet **137,** a time it takes to decrease and remove a braking force exerted by the fluid **102** on the rotor **120** will decrease, and the electrical machine **100** may operate without any braking torque applied via the fluid **102.** Advantageously, each side of the external fluid circuit **30,** i.e. at both sides of the pump device **35,** valve devices **31, 33** are provided.

The fluid circuit **30** may further comprise a fluid reservoir **37.** The fluid reservoir **37** may be a sump or any other suitable reservoir **37.** The pump device **35** may be configured to pump fluid **102** between the reservoir **37** and the fluid circuit **30.**

As the fluid **102** brakes the rotor **120** of the electrical machine **100.** The friction caused between the fluid **102** and the rotor **120** may cause the fluid **102** to heat. In order to no dissipate this heat, the external fluid circuit **30** may be operatively connected to, or form part of a temperature system of the vehicle **10.** The temperature system may be configured to transfer heat to e.g. an interior of the vehicle **10** and/or to the energy system **20** of the vehicle **10.**

As previously indicated, the fluid **102** is advantageously an oil.

**FIG. 10** is a schematic view of a method **200** for exerting a braking torque on a rotor **120** of an electrical machine **100** according to any example and comprising any feature presented herein. The method **200** comprises controlling **210** a viscous drag of the fluid circuit **130** of the electrical machine **100.** The viscous drag may be controlled according to any example or feature presented herein.

In **FIG. 11****,** optional examples of controlling **210** the viscous drag of the fluid circuit **130** are shown. Although the options are explained and illustrated in a particular order, this is for explanatory purposes only. The different features of **FIG. 11** may be implemented separately or combined in any suitable constellation and executed in any order.

Controlling **210** the viscous drag of the fluid circuit **130** may comprise providing **212** fluid **102** at an inlet **135** of the fluid circuit **130.** As explained, increasing the amount of fluid **102** in the fluid circuit **130** will increase the viscous drag and thereby increase retardation of the rotor **120.**

Additionally, or alternatively, controlling **210** the viscous drag of the fluid circuit **130** may comprise draining **214** fluid at an outlet **137** of the fluid circuit **130.** As explained, decreasing the amount of fluid **102** in the fluid circuit **130** will decrease the viscous drag and thereby decrease retardation of the rotor **120.**

Additionally, or alternatively, controlling **210** the viscous drag of the fluid circuit 130 may comprise controlling **216** the width extension w of the fluid circuit **130.** As explained, increasing the width extension w of the fluid circuit **130** will decrease the viscous drag and thereby decrease retardation of the rotor **120.** Decreasing the width extension w of the fluid circuit **130** will increase the viscous drag and thereby increase retardation of the rotor **120.**

Example 1. An electrical machine **100** comprising a rotor **120,** a stator **110,** a housing **140** and a fluid circuit **130** provided between an interior of the housing **140** and the rotor **120** axially along a longitudinal axis A of the rotor **120,** wherein the fluid circuit **130** is adapted to, by means of a fluid **102** in the fluid circuit **130,** exert a braking torque on the rotor **120.**

Example 2. The electrical machine **100** of Example 1, wherein a width extension w of the fluid circuit **130** axially along the longitudinal axis A of the rotor **120** is defined by a first surface **121** and a second surface **131, 141** facing each other, the first surface **121** is provided by a surface **121** of the rotor **120.**

Example 3. The electrical machine **100** of Example 2, wherein the first surface **121** and the second surface **131, 141** are respectively provided with one or more vanes **135** adapted to fluidly engage vanes **135** of the other surface **121, 131, 141** to provide a viscous drag between the surfaces **121, 131, 141.**

Example 4. The electrical machine **100** of Example 2 or 3, wherein the second surface **131, 141** is provided by a surface **141** of the housing **140.**

Example 5. The electrical machine **100** of Example 2 or 3, wherein the fluid circuit **130** further comprises an intermediate part **132** rotatably arranged on the longitudinal axis A of the rotor **120** axially between the rotor **120** and the housing **140,** the second surface **131, 141** is provided by a surface **131** of the intermediate part **132.**

Example 6. The electrical machine **100** of any one of Examples 2 to 5, wherein the first surface **121** and/or the second surface **131** is movable along the rotational axis X to control the width extension w of the fluid circuit **130.**

Example 7. The electrical machine **100** of Example 6, wherein the fluid circuit **130** further comprises a substantially constant amount of fluid **102.**

Example 8. The electrical machine **100** of any one of Examples 1 to 6, wherein the fluid circuit **130** further comprises at least one fluid inlet **135** for receiving the fluid **102** into the fluid circuit **130** and at least one fluid outlet **137** for draining the fluid **102** from the fluid circuit **130.**

Example 9. The electrical machine **100** of any one of the preceding Examples, wherein the fluid circuit **130** forms part of a cooling system of the electrical machine **100.**

Example 10. The electrical machine **100** of any one of Examples 1 to 8, further comprising a Water Ethanol Glycol, WEG, cooling system .

Example 11. The electrical machine **100** of any one of the preceding Examples, wherein the fluid circuit **130** is arranged at a side of the stator **110** proximal to a drive shaft 150 of the electrical machine **100.**

Example 12. The electrical machine **100** of any one of Examples 1 to 10, wherein the fluid circuit **130** is arranged at a side of the stator **110** distal to a drive shaft **150** of the electrical machine **100.**

Example 13. The electrical machine **100** of any one of the preceding Examples, wherein the electrical machine is a propulsion motor for a vehicle **10.**

Example 14. The electrical machine **100** of any one of Examples 1 to 12, wherein the electrical machine **100** is an alternator .

Example 15. The electrical machine **100** of Example 1, wherein a width extension w of the fluid circuit **130** axially along the longitudinal axis A of the rotor **120** is defined by a first surface **121** and a second surface **131, 141** facing each other, the first surface **121** is provided by a surface **121** of the rotor **120;** the first surface **121** and the second surface **131, 141** are respectively provided with one or more vanes **135** adapted to fluidly engage vanes **135** of the other surface **121, 131, 141** to provide a viscous drag between the surfaces **121, 131, 141;** wherein the second surface **131, 141** is provided by a surface **141** of the housing **140** or the fluid circuit **130** further comprises an intermediate part **132** rotatably arranged on the longitudinal axis A of the rotor **120** axially between the rotor **120** and the housing **140** and the second surface **131, 141** is provided by a surface **131** of the intermediate part **132;** the first surface **121** and/or the second surface **131, 141** is movable along the rotational axis X to control the width extension w of the fluid circuit **130** and the fluid circuit **130** further comprises a substantially constant amount of fluid **102;** the fluid circuit **130** further comprises at least one fluid inlet **135** for receiving the fluid **102** into the fluid circuit **130** and at least one fluid outlet **137** for draining the fluid **102** from the fluid circuit **130;** the fluid circuit **130** forms part of a cooling system of the electrical machine **100;** the electrical machine **100** further comprises a Water Ethanol Glycol, WEG, cooling system; the fluid circuit **130** is arranged at a side of the stator **110** proximal to a drive shaft **150** of the electrical machine **100** or the fluid circuit **130** is arranged at a side of the stator **110** distal to a drive shaft **150** of the electrical machine **100;** the electrical machine is a propulsion motor for a vehicle **10** or the electrical machine **100** is an alternator.

Example 16. A vehicle **10** comprising the electrical machine according to any of the preceding Examples.

Example 17. The vehicle **10** of Example 16, wherein the electrical machine **100** comprises at least one fluid inlet **135** for receiving the fluid **102** into the fluid circuit **130** and at least one fluid outlet **137** for draining the fluid **102** from the fluid circuit **130,** wherein the fluid inlet **135** and fluid outlet **137** are operatively connected to a temperature system of the vehicle **10.**

Example 18. A method **200** of exerting a braking torque on the rotor **120** of an electrical machine **100** of any one of Examples **1** to **15,** the method **200** comprising: controlling **210** a viscous drag of the fluid circuit **130.**

Example 19. The method of Example 18, wherein controlling **210** a viscous drag of the fluid circuit **130** comprises providing **212** fluid **102** at an inlet **135** of the fluid circuit **130** and/or draining **214** fluid at an outlet **137** of the fluid circuit **130.**

Example 20. The method of Example 18 or 19, wherein controlling **210** a viscous drag of the fluid circuit **130** comprises a controlling **216** a width extension w of the fluid circuit **130,** the width extension w is defined along the longitudinal axis A by a distance between a first surface **131** and an opposing second surface **133** of the fluid circuit **130.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electrical machine **(100)** comprising a rotor **(120),** a stator **(110),** a housing **(140)** and a fluid circuit **(130)** provided between an interior of the housing **(140)** and the rotor **(120)** axially along a longitudinal axis (A) of the rotor **(120),** wherein the fluid circuit **(130)** is adapted to, by means of a fluid **(102)** in the fluid circuit **(130),** exert a braking torque on the rotor **(120).**

2. The electrical machine **(100)** of claim **1,** wherein a width extension (w) of the fluid circuit **(130)** axially along the longitudinal axis (A) of the rotor **(120)** is defined by a first surface **(121)** and a second surface **(131, 141)** facing each other, the first surface **(121)** is provided by a surface **(121)** of the rotor **(120).**

3. The electrical machine **(100)** of claim **2,** wherein the first surface **(121)** and the second surface **(131, 141)** are respectively provided with one or more vanes **(135)** adapted to fluidly engage vanes **(135)** of the other surface **(121, 131, 141)** to provide a viscous drag between the surfaces **(121, 131, 141).**

4. The electrical machine **(100)** of claim **2** or **3,** wherein the second surface **(131, 141)** is provided by a surface **(141)** of the housing **(140).**

5. The electrical machine **(100)** of claim **2** or **3,** wherein the fluid circuit **(130)** further comprises an intermediate part **(132)** rotatably arranged on the longitudinal axis (A) of the rotor **(120)** axially between the rotor **(120)** and the housing **(140),** the second surface **(131, 141)** is provided by a surface **(131)** of the intermediate part **(132).**

6. The electrical machine **(100)** of any one of claims **2** to **5,** wherein the first surface **(121)** and/or the second surface **(131)** is movable along the rotational axis (X) to control the width extension (w) of the fluid circuit **(130),** preferably, the fluid circuit **(130)** further comprises a substantially constant amount of fluid **(102).**

7. The electrical machine **(100)** of any one of the preceding claims, wherein the fluid circuit **(130)** further comprises at least one fluid inlet **(135)** for receiving the fluid **(102)** into the fluid circuit **(130)** and at least one fluid outlet **(137)** for draining the fluid **(102)** from the fluid circuit **(130).**

8. The electrical machine **(100)** of any one of the preceding claims, wherein the fluid circuit **(130)** is arranged at a side of the stator **(110)** proximal to a drive shaft **(150)** of the electrical machine **(100)** or the fluid circuit **(130)** is arranged at a side of the stator **(110)** distal to a drive shaft **(150)** of the electrical machine **(100).**

9. The electrical machine **(100)** of any one of the preceding claims, wherein the electrical machine is a propulsion motor for a vehicle **(10)** or an alternator for the vehicle **(10).**

10. The electrical machine **(100)** of claim **1,** wherein a width extension (w) of the fluid circuit **(130)** axially along the longitudinal axis (A) of the rotor **(120)** is defined by a first surface **(121)** and a second surface **(131, 141)** facing each other, the first surface **(121)** is provided by a surface **(121)** of the rotor **(120),** the first surface **(121)** and the second surface **(131, 141)** are respectively provided with one or more vanes **(135)** adapted to fluidly engage vanes **(135)** of the other surface **(121, 131, 141)** to provide a viscous drag between the surfaces **(121, 131, 141);** the second surface **(131, 141)** is provided by a surface **(141)** of the housing **(140)** or the fluid circuit **(130)** further comprises an intermediate part **(132)** rotatably arranged on the longitudinal axis **(A)** of the rotor **(120)** axially between the rotor **(120)** and the housing **(140),** the second surface **(131, 141)** is provided by a surface **(131)** of the intermediate part **(132);** the first surface **(121)** and/or the second surface **(131)** is movable along the longitudinal axis **(A)** to control the width extension (w) of the fluid circuit **(130),** preferably; the fluid circuit **(130)** comprises a substantially constant amount of fluid **(102)** or the fluid circuit **(130)** further comprises at least one fluid inlet **(135)** for receiving the fluid **(102)** into the fluid circuit **(130)** and at least one fluid outlet **(137)** for draining the fluid **(102)** from the fluid circuit **(130);** the fluid circuit **(130)** is arranged at a side of the stator **(110)** proximal to a drive shaft **(150)** of the electrical machine **(100)** or the fluid circuit **(130)** is arranged at a side of the stator **(110)** distal to a drive shaft **(150)** of the electrical machine **(100);** the electrical machine is a propulsion motor for a vehicle **(10)** or an alternator for the vehicle **(10).**

11. A vehicle **(10)** comprising the electrical machine according to any of the preceding claims.

12. The vehicle **(10)** of claim **11,** wherein the electrical machine **(100)** comprises at least one fluid inlet **(135)** for receiving the fluid **(102)** into the fluid circuit **(130)** and at least one fluid outlet **(137)** for draining the fluid **(102)** from the fluid circuit **(130),** wherein the fluid inlet **(135)** and fluid outlet **(137)** are operatively connected to a temperature system of the vehicle **(10).**

13. A method **(200)** of exerting a braking torque on the rotor **(120)** of an electrical machine **(100)** of any one of claims **1** to **10,** the method **(200)** comprising:
controlling **(210)** a viscous drag of the fluid circuit **(130).**

14. The method of claim **13,** wherein controlling **(210)** a viscous drag of the fluid circuit **(130)** comprises providing **(212)** fluid **(102)** at an inlet **(135)** of the fluid circuit **(130)** and/or draining **(214)** fluid at an outlet **(137)** of the fluid circuit **(130).**

15. The method of claim **13** or **14,** wherein controlling **(210)** a viscous drag of the fluid circuit **(130)** comprises a controlling **(216)** a width extension (w) of the fluid circuit **(130),** the width extension (w) is defined along the longitudinal axis (A) by a distance between a first surface **(131)** and an opposing second surface **(133)** of the fluid circuit **(130).**
